# EUROPEAN PATENT SPECIFICATION

(11) **EP 3 294 532 B1**
(45) Date of publication and mention of the grant of the patent: **12.02.2020**
(21) Application number: 16725028.1
(22) Date of filing: 11.05.2016
(51) Int. Cl.: B29C 70/34, B29C 70/54, B29L 31/08

(54) **IMPROVEMENTS RELATING TO THE PRODUCTION OF WIND TURBINE COMPONENTS**
VERBESSERUNGEN IM ZUSAMMENHANG MIT DER HERSTELLUNG VON WINDTURBINENKOMPONENTEN
AMÉLIORATIONS APPORTÉES À LA PRODUCTION DE COMPOSANTS D'ÉOLIENNE

(30) Priority: 12.05.2015 DK 201570276
(43) Date of publication of application: 21.03.2018
(73) Proprietor: Vestas Wind Systems A/S, 8200 Aarhus N (DK)
(72) Inventor: HUNTER, Robert, Cowes Isle of Wight PO31 7NE (GB); SMITH, Jonathan, Burridge Hampshire SO31 1BL (GB)
(74) Representative: Vestas Patents Department
(86) International application number: PCT/DK2016/050121
(87) International publication number: WO 2016/180420

(56) References cited:
- WO-A1-92/00845
- WO-A1-2010/097657
- WO-A1-2014/166493

## Description

### TECHNICAL FIELD

The present invention relates generally to the manufacture of wind turbine components such as wind turbine blades.

### BACKGROUND

Modern wind turbine components, such as blade shells, are often formed in large moulds. This process generally involves arranging various constituent materials of the component in the mould in a 'layup process' to form a 'layup'. Typically, a number of layers of fibrous reinforcing fabric, such as glass or carbon fibre plies, are arranged in the mould first. Other structural components, such as foam panels and reinforcing spars, are then placed into the mould on top of and/or between the fibre plies to form the layup.

The layup is then covered using a vacuum bag and the bag is sealed against the mould to form a sealed region encapsulating the layup. A vacuum is applied to the sealed region and liquid resin is admitted into the sealed region, infusing throughout the various materials. Thereafter, the resin is cured by applying heat and pressure to the mould until the resin hardens. This infusion process is commonly referred to as vacuum assisted resin transfer moulding (VARTM), but the skilled person will be aware of other methods of manufacturing composite components.

Since wind turbine blade moulds are very large and expensive, a typical blade production facility may have relatively few moulds. It is therefore important to minimise the 'in-mould time' (i.e. the time in which a mould is monopolised during blade production) to maximise the efficiency and rate of blade production. One way of reducing the in-mould time is to increase the efficiency of the layup process. In this respect, it is known for a number of layers of constituent materials, for example glass-fibre fabric layers, to be arranged outside the mould into a 'kit' that is then placed into the mould as one piece in a single operation.

To prevent the layers of the kit moving relative to one another, it is known for the layers to be attached together outside of the mould. Typically, this is done by stitching, as illustrated by Figure 1a, which shows a stack 10 of four layers of material 12 attached together by rows of stitching 14 to form a kit 16. Figure 1b is a cross section of the kit 16, taken along the line A-A in Figure 1a, showing the stitches 14 extending through the layers 12 of the kit 16. This stitching can be performed either by hand or using a stitching machine. Whilst stitching works well, it is itself a relatively time consuming process.

During layup, it is important that the various constituent materials are arranged with precision relative to the mould surface and to each other. If the materials are not arranged accurately, then the structure of the resulting component may be compromised. It is particularly challenging to ensure the correct position of materials arranged against curved or otherwise inclined regions of the mould surface. This is because the materials have a tendency to slide or sag relative to the mould surface in such regions. This problem is particularly acute in portions of a wind turbine blade mould corresponding to the root end and parts of the leading edge of the blade. In these regions, the curvature of the mould is highly pronounced and some components are arranged against a near vertical surface.

A number of techniques have been proposed to prevent relative movement of the materials in the mould during lay-up, for example the use of spray adhesives. In this technique, an adhesive substance, for example epoxy resin, is sprayed onto the surface of the fibrous fabric and the other components (for example further layers of fibrous fabric) are laid on top. The adhesive qualities of the resin mean that the materials are less likely to slide away from their correct positions in the mould. However, spraying adhesive substances such as epoxy carries health and safety risks and its use is prohibited in some countries. In addition, such adhesives are sensitive to temperature and therefore their use may not always be practical. Accordingly, there is a need for an improved technique suitable for attaching layers of materials together to maintain their relative alignment during the manufacture of a wind turbine component in a way that is safe, reliable and efficient.

WO92/00845A1 describes an apparatus and method for fastening together layers of fabric material to form a stack. WO2014/166493A1 described a method of making a root of wind turbine blade and a fibre preform for laying on the curved surface of a wind turbine blade mould. WO2010/097657 discloses a method of producing aero-generator blades wherein stack of layers are joined together before being laid-up.

### SUMMARY OF INVENTION

According to an aspect of the present invention, there is provided a method of making a composite wind turbine component in a mould, the method comprising (in any suitable order) the steps of: providing a mould; providing one or more first layers of material; arranging the one or more first layers of material in the mould; arranging one or more second layers of material on top of the one or more first layers to form a stack; and securing the one or more second layers in the stack to the one or more first layers in the stack by means of one or more fasteners. The or each fastener comprises a filament having a first retaining element at a first end and a second retaining element at a second end and the method further comprises inserting the first retaining element of the or each fastener through the one or more second layers and through the one or more first layers such that the first retaining element is located on one side of the stack and the second retaining element is located on the other side of the stack, with the filament extending through the stack. The insertion of the first retaining element is performed using a tagging gun comprising a hollow needle, and the method involves inserting the needle through the stack and dispensing a fastener through the needle

This aspect of the invention provides the advantage that layers of material to be used in the production of a wind turbine component can be secured together without the disadvantages associated with prior art techniques. Use of fasteners of this type does not pose a health and safety concern and the retaining elements prevent the fasteners from becoming dislodged from the stack of layers of material. This aspect of the invention provides a quick and simple way of securing materials together in the context of wind turbine manufacturing. Therefore, the method aids the efficient production of composite wind turbine components.

As will be discussed further below, the steps of the method may be performed in any suitable order. For example, the second layer(s) may be secured to the first layer(s) before or after the layers are arranged in the mould. That is, the second layer(s) may be secured to the first layer(s): within the mould, during the layup process; or outside the mould, prior to the layup process.

The or each fastener may be a plastic fastener and one or both of the retaining elements of the or each fastener may be in the form of a cross bar. Fasteners of this type are advantageously inexpensive and readily available.

According to the invention, the insertion of the first retaining element is performed using a tagging gun comprising a hollow needle. The method involves inserting the needle through the stack and dispensing a fastener through the needle. Such a tagging gun is simple to use. In addition, the use of a tagging gun allows fasteners to be dispensed quickly, contributing to the efficient production of the wind turbine component. Such tagging guns are also advantageously inexpensive and readily available.

The one or more second layers in the stack may be secured to the one or more first layers in the stack after the one or more first layers and the one or more second layers have been arranged in the mould. This allows the layers of material to be attached conveniently within the mould.

Alternatively, the one or more second layers of material may be arranged on top of the one or more first layers and secured to the one or more first layers before arranging the stack in the mould. In this way, the layers are formed into a kit outside of the mould. This advantageously reduces the in-mould time and increases the efficiency of the layup process. In this case, a backing layer may optionally be provided beneath the one or more first layers prior to securing the one or more second layers to the one or more first layers. The backing layer may be made from a compliant material, such as foam or it may comprise bristles. Alternatively, the backing layer may comprise a spacer which supports the layers such that a gap is formed under the layers. The backing layer facilitates the fastening process by allowing the needle to penetrate completely through the stack such that the needle tip extends into the backing layer. It also helps prevent damage to the tip of the needle during the fastening process. By "compliant" is meant that the backing layer can be elastically deformed by the needle of the tagging gun.

The fasteners may have a length that is greater than the thickness of the kit. This allows for relative movement between the layers and prevents wrinkles from forming in the layers of materials. The length of the fasteners is the length of the filament, i.e. the distance between the first and second retaining elements. The thickness of the kit is the thickness of the layers of materials that are arranged on top of each other,

The method may comprise arranging a plurality of first layers in a first stack and fastening said first layers together; arranging a plurality of second layers in a second stack and fastening said second layers together; and fastening the first and second stacks together by means of fasteners to form a combined stack. This allows a large number of layers of material to be attached together efficiently.

In such cases, the combined stack may be assembled outside the mould and transferred into the mould in a single lifting operation. This allows a large quantity of material to be deposited in the mould whilst minimising the in-mould time and therefore increasing the efficiency of the layup process.

The one or more first layers and/or the one or more second layers may include fibrous reinforcing material, and/or consumable materials for use in a vacuum-assisted moulding process to form the composite component. For example, the layers of material may be layers of glass fibre fabric and/or vacuum film.

The wind turbine component may be a wind turbine blade. The method of the invention may of course be used to attach constituent materials of other wind turbine components.

The inventive concept further encompasses the use of a tagging gun to administer plastic fasteners to secure a plurality of layers together during the manufacture of a wind turbine blade according to claim 15. The use of a tagging gun allows fasteners to be quickly and simply dispensed for use in the manufacture of a wind turbine blade.

### BRIEF DESCRIPTION OF THE DRAWINGS

Figures 1a and 1b have already been described above by way of background. In order that the invention may be more readily understood, examples of the invention will now be described with reference to the accompanying figures, in which:
Figure 2a shows a plurality of layers of material arranged in a stack and fastened together with plastic fasteners;
Figure 2b shows a typical plastic fastener suitable for use in the present invention;
Figure 2c is a cross-section of the stack of Figure 2a, showing the plastic fasteners extending through the various layers;
Figures 3a to 3e are cross-sectional views of a mould, illustrating sequential steps in a method of fastening materials together in the mould in accordance with the invention;
Figures 4a to 4e relate respectively to Figures 3a to 3e and show enlarged schematic views of the layers shown in Figures 3a to 3e, illustrating how the layers are fastened together;
Figure 4f shows the layers fastened together in an alternative configuration to the one shown in Figure 4e;
Figure 5a is a cross-sectional view of a stack of layers fastened together to form a kit;
Figure 5b shows the kit of Figure 5a arranged in a mould;
Figures 6a and 6b are cross-sectional views of a mould, illustrating sequential steps in a method of fastening kits together to form a combined kit within a mould;
Figures 7a and 7b relate respectively to Figures 6a and 6b and show enlarged views of the kits shown in Figures 6a and 6b, illustrating the method of fastening the kits together in more detail;
Figure 8a shows a method of fastening kits together to form a combined kit outside the mould;
Figure 8b shows the combined kit of Figure 8a arranged in a mould; and
Figures 9a and 9b are cross-sectional views of a stack of layers fastened together on a backing layer.

### DETAILED DESCRIPTION

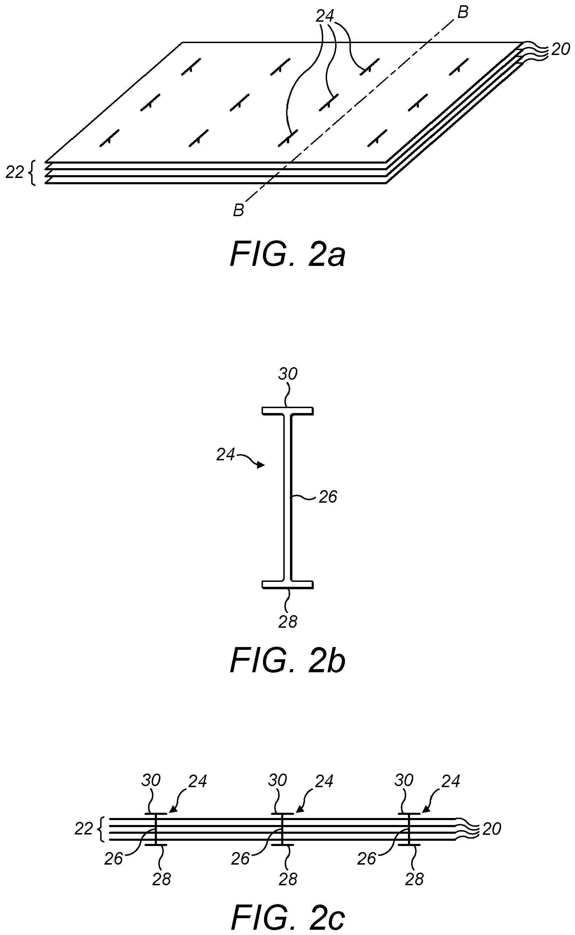

Referring initially to Figure 2a, this shows a plurality of layers 20 of material arranged one on top of another in a stack 22. In this particular example, the layers 20 are dry glass fibre fabric plies, and the stack 22 comprises four layers 20; however, the skilled person will appreciate that more or fewer layers 20 may be attached together as required. The layers 20 in the stack 22 are attached together by a plurality of fasteners 24. In this example, the fasteners 24 are arranged in a series of rows but in other embodiments, the fasteners 24 may be arranged in any other suitable configuration as required.

Referring to Figure 2b, this shows a fastener 24 in more detail. As can be seen, the fastener 24 comprises a central elongate filament 26 and two cross bars 28, 30. The two cross bars 28, 30 are respectively located at first and second ends of the filament 26 and are at right angles to the central filament 26. Thus, the fastener 24 is I-shaped. In this example, the fastener 24 is made from a plastics material, for example polypropylene, but in other embodiments of the invention, the fastener 24 may be made from any other suitable material. Suitable fasteners are manufactured, for example by Avery Dennison®.

In order to attach the plurality of layers 20 together, the fasteners 24 are arranged such that they extend through the height/thickness of the stack 22, as can be seen in Figure 2c, which shows a cross sectional view of the stack 22 of Figure 2a taken along the line B-B in Figure 2a. The central filament 26 of each fastener 24 extends through the stack 22 and the first and second cross bars 28, 30 of each fastener 24 are located on opposite sides of the stack 22. The cross bars 28, 30 act as retaining elements and prevent the fasteners 24 from becoming dislodged from the stack 22.

The fasteners 24 are conveniently dispensed/deployed using a 'tagging gun' comprising a hollow needle. To dispense a fastener 24, the needle is first inserted through the stack 22. The first cross bar 28 of the fastener 24 is then fed inside the hollow needle, through the stack 22 and dispensed from the tip of the needle on the opposite side of the stack 22. The central filament 26 of the fastener 24 is flexible, so that the filament 26 can be folded substantially parallel with the first cross bar 28 to allow the first cross bar 28 to be fed inside the hollow needle. The second cross bar 30 is not inserted through the stack 22 and so the two cross bars 28, 30 are located on opposite sides of the stack 22, with the filament 26 extending through the stack 22.

The skilled person will appreciate that it is not essential that the retaining elements of the fastener take the form of cross bars 28, 30 as shown in Figure 2b. All that is required is that the first retaining element is of such a shape that it will prevent withdrawal of the fastener 24 through the stack 22 and the second retaining element is of such a shape that it will prevent the filament 26 from being inserted completely through the stack 22. Therefore, there are many other suitable forms that the fastener could take, but the fasteners 24 described above are particularly preferred as they are readily available and inexpensive.

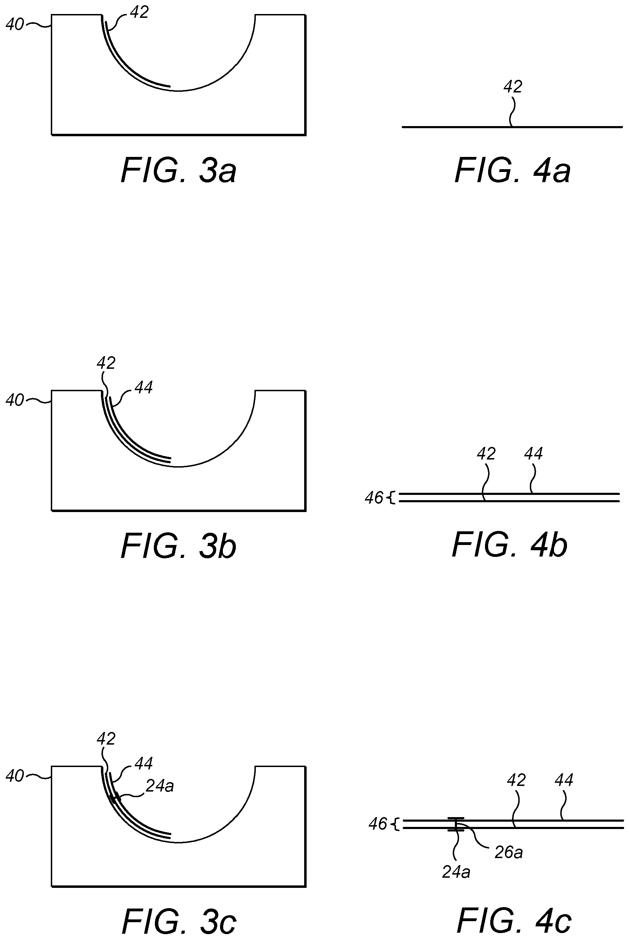

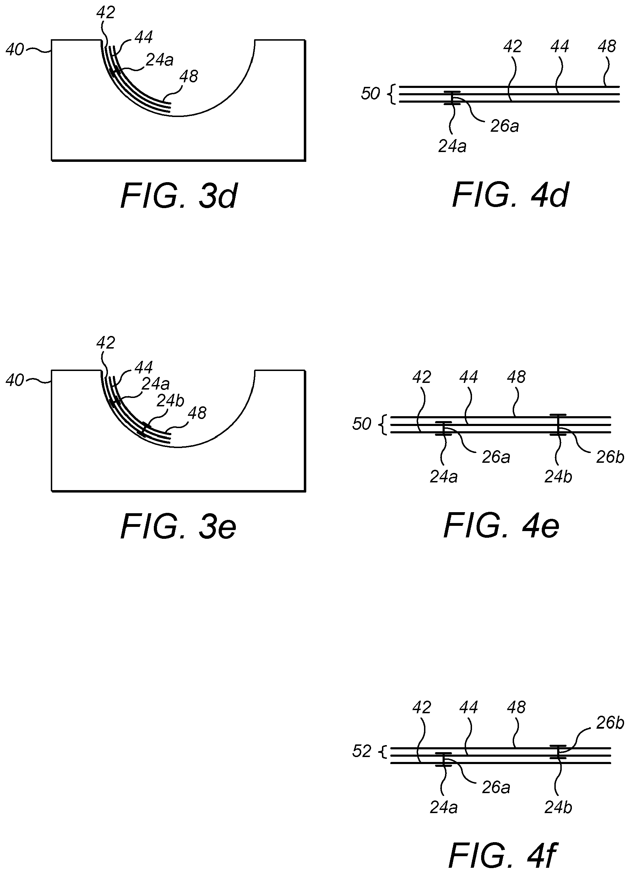

The use of such fasteners 24 in the manufacture of a wind turbine blade will now be described in more detail with reference to Figures 3 to 7. Figures 3a to 3e show sequential cross-sectional views of a wind turbine blade mould as it is laid-up with various constituent materials that are secured according to the method of the invention. Figures 4a to 4e correspond to Figures 3a to 3e and show the layers of material arranged in the mould in more detail.

It should be noted at this stage that, for ease of illustration, the accompanying figures are highly schematic. In particular, the relative proportions of the mould, the fasteners and the spaces between layers of material are not intended to be accurate. In reality the fasteners would be significantly smaller in comparison to the mould, and the layers would be significantly thinner.

Referring to Figure 3a, this shows a mould 40 for a wind turbine blade with a single layer of material 42 arranged within it. In this example, the layer of material 42 is a layer of glass fibre fabric. In other embodiments, the material may be any suitable constituent material of the wind turbine component, for example another fibrous reinforcing material. Figure 4a shows this fabric layer 42 in isolation.

Figure 3b shows the same mould 40, with a second layer of material 44 arranged on top of the first layer 42, to form a stack 46 of two layers 42, 44 within the mould 40. Figure 4b shows the two layers 42, 44 in isolation. In this example, the two layers 42, 44 are similar; that is, they are similarly sized pieces of glass fibre fabric. In other embodiments, the layers 42, 44 in the stack 46 may be dissimilar as required by the design of the wind turbine component.

After the first and second layers 42, 44 have been arranged in the mould 40, the second layer 44 is then secured to the first layer 42 in the stack 46. Figures 3c and 4c show the second layer 44 attached to the first layer 42 by means of a fastener 24a of the type shown in Figure 2b. As described previously with reference to Figure 2c, the cross bars 28a, 30a are located on opposite sides of the stack 46 and the filament 26a extends through the stack 46. For ease of illustration, only one fastener 24a is shown. In practice, the second layer 44 may be secured to the first layer 42 by means of a plurality of fasteners. As discussed previously in relation to Figure 2a, these fasteners may be arranged in any suitable pattern or configuration.

Figures 3d and 4d show a third layer of material 48 arranged in the mould 40, on top of the second layer of material 44.

Figure 3e shows the third layer of material 48 secured to the stack 46 formed by the first and second layers of material 42, 44 to form a thicker stack 50 comprising all three layers 42, 44, 48. As can be seen from the figure, the third layer 48 is secured by means of a further fastener 24b of the type shown in Figure 2b. Again, the fastener 24b is inserted after the third layer 48 has been arranged in the mould 40. In reality, a plurality of further fasteners would be used to secure the third layer 48.

Figure 4e shows the thicker stack 50 in isolation. The filament 26b of the further fastener 24b can be seen extending through the entire stack 50; that is: through the first, second and third layers 42, 44, 48. It will be appreciated that, for ease of illustration, the fasteners 24a, 24b have been shown with filaments 26a, 26b of different lengths. In practice, the filaments 26a, 26b may be the same length or different lengths as required. Since the filaments 26a, 26b are flexible, the length of the filament 26a, 26b may be greater than the thickness of the stack 46, 50 without interfering with the structure of the stack 46, 50. Using identical fasteners is advantageous since fasteners of this type are usually provided in a connected strip to be dispensed from the tagging gun in series. Thus, the same tagging gun and strip of fasteners may conveniently be used to dispense all of the required fasteners.

Figure 4f shows an alternative configuration to the one shown in Figure 4e in which the filament 26b of the further fastener 24b does not extend through the entire stack of layers 50. In such configurations, the filament 26b extends through a stack comprising a subset of the layers of material arranged in the mould. Specifically, in this example, the filament 26b extends through a stack 52 comprising the second and third layers 44, 48, with the first and second retaining elements being located on opposite sides of this stack 52. Both configurations may be used interchangeably as necessary.

The skilled person will appreciate that this process may be repeated to secure fourth, fifth and subsequent layers of material on top of the third layer 48 as required. If the stack of layers in the mould 40 becomes very thick, and in particular with a thickness greater than the length of the filament of the fastener, then it may be advantageous to attach further layers in the configuration shown in Figure 4f; that is, with the filament extending through a stack formed by a subset of those layers. Alternatively, a fastener with a longer filament may be used as the stack becomes thicker.

Although it is beneficial in certain situations to secure layers of material together individually within the mould 40 as above, in other circumstances, particularly where a larger number of layers are required to be arranged in the mould 40, this process can be excessively time consuming. In order to reduce the in-mould time required for the layup process, a number of layers of material may be attached together outside the mould 40 and placed into the mould 40 as one piece. As described above by way of introduction, the pre-attached stack of layers is known as a 'kit'.

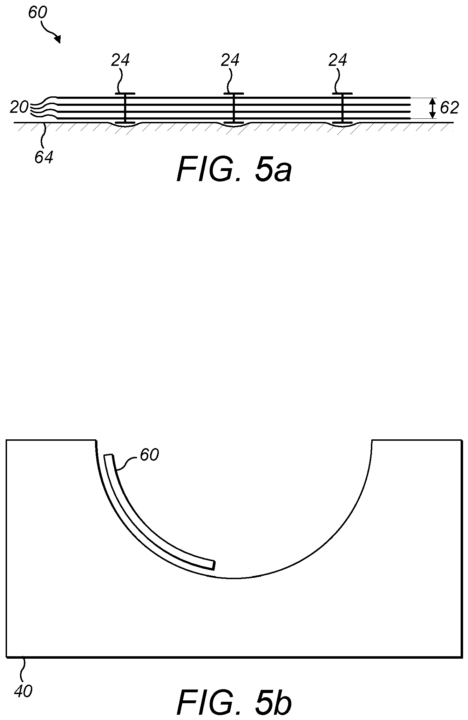

Figure 5a shows a cross section of a kit 60 where the layers of material 20 are attached together in accordance with the method of the invention. The layers 20 of the kit 60 can be seen in Figure 5a as can the fasteners 24 extending through the stack 22. In this particular example, the kit 60 comprises four layers 20 but the skilled person will appreciate that the kit 60 may comprise any number of layers 20 as required. Similarly, three fasteners 24 are shown in Figure 5 for ease of illustration, but the kit 60 may be secured together by means of more or fewer fasteners 24 in any appropriate arrangement in accordance with the required size and shape of the kit 60.

The filaments 26 of the fasteners 24 have a length that is greater than the thickness 62 of the kit 60. This allows for a small amount of relative movement between layers 20. This may be advantageous when arranging the kit 60 in a curved mould 40, since the kit 60 is able to 'drape'. By this we mean that the kit 60 is flexible and conforms to the curve of the surface it is arranged on. This can also prevent wrinkles from forming in the layers of material when the kit 60 is curved. In comparison, stitching relies on tension to pull the layers tightly together and so produces a kit that is less flexible. Further, since the fasteners 24 do not rely on tension, they create a kit 60 with a level surface, without the undulations caused by lines of stitches.

As shown in Figure 5a, a compliant backing layer 64 is provided underneath the kit 60. In this example, the backing layer 64 is a thin layer of foam (such as neoprene foam), but other suitable materials may be used. During the fastening process, the needle of the tagging gun penetrates completely through all the layers 20 of the kit 60 and extends into the backing layer 64. This ensures that when a fastener 24 is dispensed from the tip of the needle, the filament extends through all the layers 20 of the kit 60. The backing layer 64 also helps prevents damage to the tip of the needle during the fastening process.

As shown in Figure 5b, once the kit 60 has been attached together it is then arranged in the mould 40 as one piece. The backing layer 64 may be used to support the kit 60 during transportation to the mould 40 and is removed prior to arranging the kit 60 in the mould 40. Since the kit 60 is arranged in the mould 40 in a single operation, the efficiency of the layup process is advantageously increased.

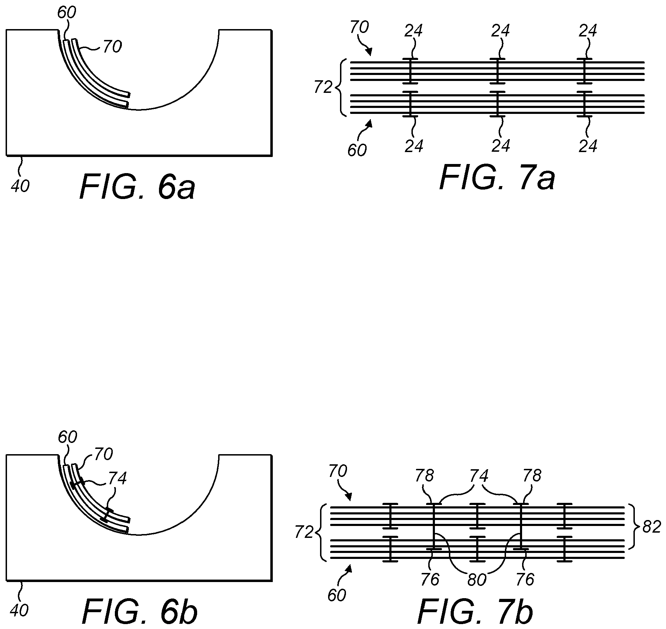

This increase in efficiency is particularly beneficial in areas of the blade where a very large number of layers of material are required to be arranged in the mould 40, for example at the root end of the blade. In such areas, it may be necessary to arrange a number of kits in the mould 40 on top of one another, as described below with reference to Figures 6 and 7.

Referring initially to Figure 6a, this shows the wind turbine blade mould 40 of Figure 5b. A second kit 70 is arranged on top of the first kit 60 in the mould 40. Figure 6b shows the two kits 60, 70 in isolation. It will be appreciated that the space between the two kits 60, 70 has been exaggerated in this figure for ease of illustration. In this particular example, the two kits 60, 70 are similar and both comprise four layers of material attached together by plastic fasteners. In other embodiments, each kit may comprise more or fewer layers as appropriate and the layers of material within each kit may be attached together by stitches or any other appropriate means.

Figures 6b and 7b show the second kit 70 secured to the first kit 60 using plastic fasteners to form a combined kit 72. Two fasteners 74 are shown in these figures for ease of illustration, but it will be appreciated that in reality there may be more or fewer fasteners 74 arranged in any suitable pattern or configuration.

In this example, the first cross bar 76 of each fastener 74 is located between two adjacent layers 20 of the first kit. The second cross bar 78 of each fastener 74 is located on the top side of the second kit 70. Thus, the filament 80 of each fastener 74 extends through a stack 82 comprising all four layers 20 of the second kit 70 and the top two layers 20 of the first kit 60. The first and second cross bars 76, 78 are located on opposite sides of this stack 82. It will be appreciated that all that is required to secure the second kit 70 to the first kit 60 is that the filaments 80 extend through at least one layer 20 of the first kit 60. So in other embodiments, the filaments 80 may extend through a stack comprising any number of the layers of the first kit 60.

The skilled person will appreciate that if more layers of material 20 are required to be arranged in the mould 40 then this process may be repeated to secure third, fourth and subsequent kits on top of the combined kit 72 in the mould 40. Alternatively, one or more layers of material may be secured individually on top of the combined kit 72 according to the method described above in relation to Figures 3 and 4.

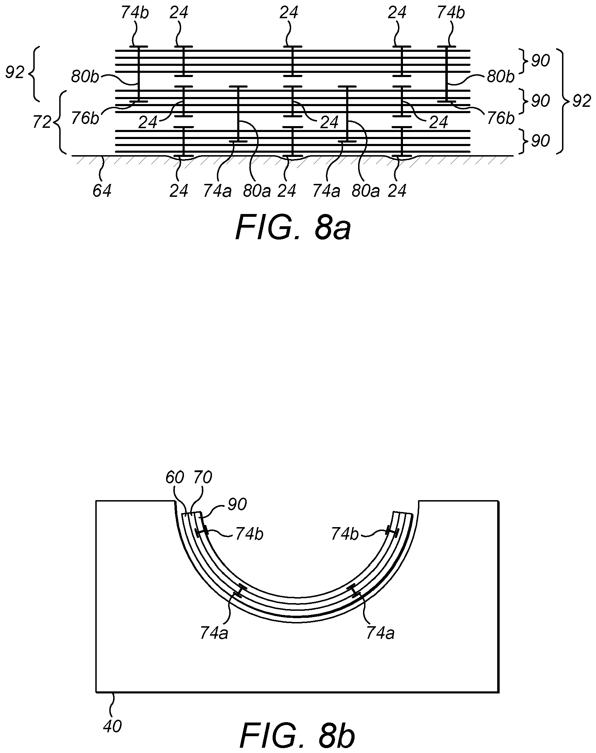

If a very large number of layers are required to be arranged in the mould 40, as is the case at the root end of the blade, it may time-consuming to secure kits individually within the mould 40 as described above. Therefore, a number of kits can be attached together prior to the layup process, outside of the mould 40 in order to reduce the in-mould time required for the layup process. The attached kits can then be arranged in the mould 40 as one piece in a single operation as described below with reference to Figures 8a and 8b.

Figure 8a shows three kits 60, 70, 90 attached together using fasteners 74a, 74b of the type shown in Figure 2b. The second kit 70 is arranged on top of the first kit 60 and is secured to the first kit 60 using plastic fasteners 74a to form a combined kit, similarly to the description above except that the second kit 70 is secured to the first kit 60 outside the mould. The third kit 90 is then arranged on top of the second kit 70 and secured to the combined kit 72 by means of two further plastic fasteners 74b, forming a combined kit 92 of three kits 60, 70, 90. Two further fasteners 74b are shown in Figures 8a and 8b for ease of illustration, but it will be appreciated that in reality there may be more or fewer further fasteners arranged in any suitable pattern or configuration.

In this example, the filament 80b of each further fastener 74b extends through a stack 94 comprising all four layers of the third kit 90 and the top two layers of the second kit 70. It will be appreciated that all that is required to attach the third kit 90 to the second kit 70 is that the filament 80b extends through at least one layer of the second kit 70. Therefore, in other embodiments, the filaments 80b may extend through a stack comprising any number of layers of the second kit 70, with the first cross bars 76b being located: between different adjacent layers of the second kit 70 or between the second kit 70 and the first kit 60. The filaments 80b may also extend through any number of layers of the first kit 60, with the first cross bars 76b being located between any two adjacent layers of the first kit 60 or beneath the first layer of the first kit 60.

It should be noted that in Figures 7b and 8a, the fasteners 74, 74a, 74b connecting the kits 60, 70, 90 are shown with filaments 80, 80a, 80b that are longer than the fasteners 24 attaching the layers of the kits 60, 70, 80 themselves. In practice, the fasteners 24, 74, 74a, 74b may be the same length or different lengths as required. In other embodiments, the layers within the kits may be attached together by any other appropriate method, as discussed above in relation to Figures 6 and 7.

After the kits 60, 70, 80 have been attached to one another, the combined kit 92 is then arranged in the mould 40 as one piece, as shown in Figure 8b. Similarly to the process for a single kit, the backing layer 64 is used as a support during transportation is removed prior to the combined kit 92 being arranged in the mould 40. In Figure 8b, the kits 60, 70, 90 are shown occupying the full width of the mould 40. However, it will be appreciated that the layers of material in this and all of the other examples described above may occupy any portion of the width/length of the mould 40 as required.

Attaching kits together outside of the mould 40 as described above allows a large amount of reinforcing material to be deposited in the mould 40 in an efficient manner. Thus, the efficiency of the layup process is increased.

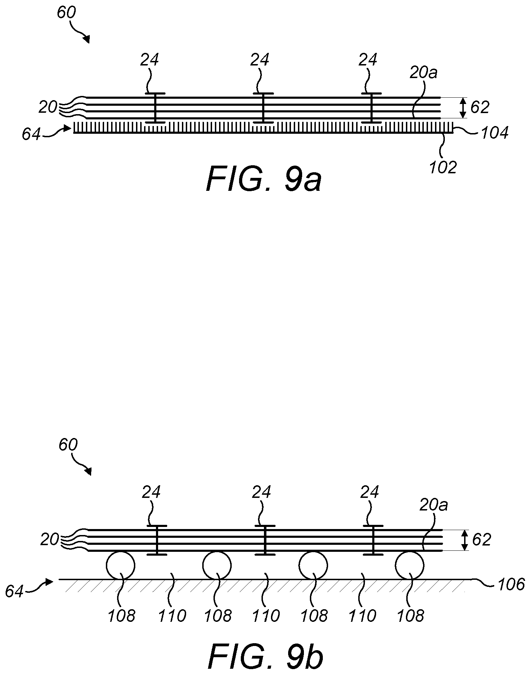

A compliant backing layer 64 was described above with reference to Figure 5a. Figure 9a shows another example of a compliant backing layer 64 provided underneath the kit 60. In this example, the compliant backing layer 64 comprises a substrate 102 from which projects a plurality of bristles 104, in the manner of artificial turf. The bristles 104 which may be formed from plastic support the layers 20 and allow the filaments of the fasteners 24 to extend through all of the layers in the kit 60. The bristles 104 can easily be deformed so that the fasteners 24 can extend through all of the layers 20. The use of a layer comprising bristles is less likely to be damaged by the needle of the tagging gun, compared to a foam layer.

In Figure 9b a further example of a backing layer 64 is shown. This backing layer of Figure 9b comprises a substrate 106 on which are mounted a plurality of spacers 108. The spacers 108 support the layers of the 60 above the substrate 108 such that gaps 110 are formed between the kit 60 and the substrate 106. It will be appreciated that Figure 9b is highly schematic and that in reality there will be sagging of the kit 60 between the spacers 108. The use of the spacers 108 which results in the gaps 110 means that the fasteners can be inserted into the stack such that the filaments extend through all of the layers 20. It is not actually necessary to have a plurality of spacers 108 - instead, just a single spacer could be used that is inserted under the layers 20 to form a gap before the fastener 24 is inserted. Then the spacer 108 is moved to the next fastener location or the layers 20 are moved while the spacer remains stationary.

It will be appreciated that many modifications may be made to the above examples without departing from the scope of the present invention as defined in the accompanying claims. For example, whilst the above embodiments describe attaching constituent materials of a wind turbine blade, attachment techniques according to the present invention are equally suitable for securing consumable materials such as vacuum film or breather fabric for use in a vacuum-assisted moulding process. Further, although the preceding description relates to wind turbine blades, the invention is equally relevant to other wind turbine components of composite construction.

## Claims

1. A method of making a composite wind turbine component in a mould (40), the method comprising the following steps in any suitable order:
a. providing a mould;
b. providing one or more first layers of material (20);
c. arranging the one or more first layers of material in the mould;
d. arranging one or more second layers of material on top of the one or more first layers to form a stack (22); and
e. securing the one or more second layers in the stack to the one or more first layers in the stack by means of one or more fasteners (24), **characterised in that**
the or each fastener comprises a filament (26) having a first retaining element (28) at a first end and a second retaining element (30) at a second end, and wherein the method further comprises:
f. inserting the first retaining element (28) of the or each fastener (26) through the one or more second layers and through the one or more first layers such that the first retaining element is located on one side of the stack and the second retaining element (30) is located on the other side of the stack, with the filament extending through the stack;
wherein step (f) is performed using a tagging gun comprising a hollow needle, and the method involves inserting the needle through the stack and dispensing a fastener through the needle.

2. The method of Claim 1, wherein the or each fastener (24) is a plastic fastener.

3. The method of Claim 1 or Claim 2, wherein one or both of the retaining elements (28, 30) of the or each fastener is in the form of a cross bar.

4. The method of any preceding claim, wherein the method comprises securing the one or more second layers in the stack (22) to the one or more first layers in the stack by means of the one or more fasteners (24) after the one or more first layers and the one or more second layers have been arranged in the mould (40).

5. The method of any of Claims 1 to 3, wherein the method comprises arranging the one or more second layers of material (20) on top of the one or more first layers to form a stack (22); and securing the one or more second layers in the stack to the one or more first layers in the stack by means of the one or more fasteners (24) before arranging the stack in the mould.

6. The method of claim 5, wherein the step of securing the one or more second layers in the stack to the one or more first layers in the stack by means of the one or more fasteners forms a kit (60).

7. The method of Claim 5 or Claim 6, further comprising providing a backing layer (64) beneath the one or more first layers prior to securing the one or more second layers to the one or more first layers.

8. The method of claim 7, wherein the backing layer (64) comprises a compliant material.

9. The method of Claim 7 or Claim 8, wherein the backing layer (64) is made from foam, or comprises bristles.

10. The method of Claim 7, wherein the backing layer (64) comprises a spacer which supports the one or more first layers such that a gap is formed under the one or more first layers.

11. The method of any of claims 6 to 10, wherein the or each fastener (24) has a length that is greater than the thickness of the kit (60).

12. The method of any preceding claim, wherein the method comprises:
arranging a plurality of first layers in a first stack and fastening said first layers together;
arranging a plurality of second layers in a second stack and fastening said second layers together; and
fastening the first and second stacks together by means of fasteners as defined in Claim 1 to form a combined stack.

13. The method of Claim 12, wherein the method further comprises assembling the combined stack outside the mould and transferring the combined stack into the mould in a single lifting operation.

14. The method of any preceding claim, wherein the one or more first layers and/or the one or more second layers includes fibrous reinforcing material, and/or consumable materials for use in a vacuum-assisted moulding process to form the composite component.

15. Use of a tagging gun to administer plastic fasteners to secure a plurality of layers (20) together during the manufacture of a wind turbine blade, the tagging gun comprising a hollow needle through which the plastic fasteners (24) are delivered.

## Patentansprüche

1. Verfahren zur Herstellung einer Windkraftanlageverbundkomponente in einer Form (40), das Verfahren umfassend die folgenden Schritte in jeder geeigneten Reihenfolge:
a. Bereitstellen einer Form;
b. Bereitstellen einer oder mehrerer erster Materialschichten (20);
c. Anordnen der einen oder mehreren ersten Materialschichten in der Form;
d. Anordnen einer oder mehrerer zweiter Materialschichten auf der einen oder den mehreren ersten Materialschichten zur Bildung eines Stapels (22); und
e. Sichern der einen oder mehreren zweiten Schichten in dem Stapel an der einen oder den mehreren ersten Schichten in dem Stapel durch eine oder mehrere Befestigungen (24), **dadurch gekennzeichnet, dass**
die oder jede Befestigung ein Filament (26) umfasst, das ein erstes Rückhalteelement (28) an einem ersten Ende und ein zweites Rückhalteelement (30) an einem zweiten Ende aufweist, und wobei das Verfahren weiter umfasst:
f. Einsetzen des ersten Rückhalteelements (28) der oder jeder Befestigung (26) durch die eine oder mehreren zweiten Schichten und durch die eine oder mehreren ersten Schichten, sodass das erste Rückhalteelement an einer Seite des Stapels liegt und das zweite Rückhalteelement (30) an der anderen Seite des Stapels liegt, wobei sich das Filament durch den Stapel erstreckt;
wobei Schritt (f) unter Verwendung einer Heftpistole durchgeführt wird, die eine Hohlnadel umfasst, und das Verfahren ein Einsetzen der Nadel durch den Stapel und Abgeben einer Befestigung durch die Nadel beinhaltet.

2. Verfahren nach Anspruch 1, wobei die oder jede Befestigung (24) eine Kunststoffbefestigung ist.

3. Verfahren nach Anspruch 1 oder Anspruch 2, wobei eines oder beide der Rückhalteelemente (28, 30) der oder jeder Befestigung die Form einer Querstange aufweisen.

4. Verfahren nach einem der vorstehenden Ansprüche, wobei das Verfahren ein Sichern der einen oder mehreren zweiten Schichten in dem Stapel (22) an der einen oder den mehreren ersten Schichten im Stapel durch die eine oder die mehreren Befestigungen (24) umfasst, nachdem die eine oder mehreren ersten Schichten und die eine oder mehreren zweiten Schichten in der Form (40) angeordnet wurden.

5. Verfahren nach einem der Ansprüche 1 bis 3, wobei das Verfahren ein Anordnen der einen oder mehreren zweiten Materialschichten (20) auf der einen oder den mehreren ersten Schichten zur Bildung eines Stapels (22); und Sichern der einen oder mehreren zweiten Schichten in dem Stapel an der einen oder den mehreren ersten Schichten in dem Stapel mit Hilfe der einen oder der mehreren Befestigungen (24) umfasst, bevor der Stapel in der Form angeordnet wird.

6. Verfahren nach Anspruch 5, wobei der Schritt zum Sichern der einen oder mehreren zweiten Schichten in dem Stapel an der einen oder den mehreren ersten Schichten in dem Stapel mit Hilfe der einen oder der mehreren Befestigungen (24) ein Kit (60) bildet.

7. Verfahren nach Anspruch 5 oder Anspruch 6, weiter umfassend Bereitstellen einer Unterlagschicht (64) unterhalb der einen oder den mehreren ersten Schichten vor Sicherung der einen oder mehreren zweiten Schichten an der einen oder den mehreren ersten Schichten.

8. Verfahren nach Anspruch 7, wobei die Unterlagschicht (64) ein nachgiebiges Material umfasst.

9. Verfahren nach Anspruch 7 oder Anspruch 8, wobei die Unterlagschicht (64) aus Schaum besteht oder Borsten umfasst.

10. Verfahren nach Anspruch 7, wobei die Unterlagschicht (64) einen Abstandhalter umfasst, der die eine oder mehreren ersten Schichten so stützt, dass ein Spalt unter der einen oder den mehreren ersten Schichten gebildet wird.

11. Verfahren nach Anspruch 6 bis 10, wobei der oder jeder Befestigung (24) eine Länge aufweist, die größer als die Dicke des Kits (60) ist.

12. Verfahren nach einem der vorstehenden Ansprüche, wobei das Verfahren umfasst:
Anordnen einer Vielzahl von ersten Schichten in einem ersten Stapel und Befestigen der ersten Schichten aneinander;
Anordnen einer Vielzahl von zweiten Schichten in einem zweiten Stapel und Befestigen der zweiten Schichten aneinander; und
Befestigen der ersten und zweiten Stapel durch Befestigungen, wie in Anspruch 1 definiert, aneinander, um einen kombinierten Stapel zu bilden.

13. Verfahren nach Anspruch 12, wobei das Verfahren weiter ein Zusammenbauen des kombinierten Stapels außerhalb der Form und Überführen des kombinierten Stapels in die Form in einem einzigen Hebevorgang umfasst.

14. Verfahren nach einem der vorstehenden Ansprüche, wobei die eine oder mehreren ersten Schichten und/oder die eine oder mehreren zweiten Schichten faseriges Verstärkungsmaterial und/oder Verbrauchsmaterialien zur Verwendung in einem vakuumunterstützten Formungsprozess umfassen, um die Verbundkomponente zu bilden.

15. Verwendung einer Heftpistole zum Anbringen von Kunststoffbefestigungen zum Sichern einer Vielzahl von Schichten (20) während der Herstellung eines Windkraftanlageblattes aneinander, wobei die Heftpistole eine Hohlnadel umfasst, durch die die Kunststoffbefestigungen (24) abgegeben werden.

## Revendications

1. Procédé de fabrication d'un composant d'éolienne composite dans un moule (40), le procédé comprenant les étapes suivantes dans tout ordre approprié :
a. la fourniture d'un moule ;
b. la fourniture d'une ou plusieurs premières couches de matériau (20) ;
c. l'agencement des une ou plusieurs premières couches de matériau dans le moule ;
d. l'agencement des une ou plusieurs secondes couches de matériau par-dessus les une ou plusieurs premières couches afin de former une pile (22) ; et
e. la fixation des une ou plusieurs secondes couches dans la pile aux une ou plusieurs premières couches dans la pile au moyen d'un ou plusieurs éléments de fixation (24), **caractérisé en ce que**
le ou chaque élément de fixation comprend un filament (26) ayant un premier élément de retenue (28) au niveau d'une première extrémité et un second élément de retenue (30) au niveau d'une seconde extrémité, et dans lequel le procédé comprend en outre :
f. l'insertion du premier élément de retenue (28) du ou de chaque élément de fixation (26) à travers les une ou plusieurs secondes couches et à travers les une ou plusieurs premières couches de telle sorte que le premier élément de retenue est situé sur un côté de la pile et le second élément de retenue (30) est situé sur l'autre côté de la pile, le filament s'étendant à travers la pile ;
dans lequel l'étape (f) est exécutée en utilisant un pistolet textile comprenant une aiguille creuse, et le procédé comprend l'insertion de l'aiguille à travers la pile et la délivrance d'un élément de fixation à travers l'aiguille.

2. Procédé selon la revendication 1, dans lequel le ou chaque élément de fixation (24) est un élément de fixation en plastique.

3. Procédé selon la revendication 1 ou la revendication 2, dans lequel l'un des éléments de retenue ou les deux (28, 30) du ou de chaque élément de fixation est sous la forme d'une barre transversale.

4. Procédé selon l'une quelconque des revendications précédentes, dans lequel le procédé comprend la fixation de la une ou à plusieurs secondes couches dans la pile (22) à la une ou plusieurs premières couches dans la pile au moyen du un ou plusieurs éléments de fixation (24) après que la une ou plusieurs premières couches et la une ou plusieurs secondes couches ont été agencées dans le moule (40).

5. Procédé selon l'une quelconque des revendications 1 à 3, dans lequel le procédé comprend l'agencement des une ou plusieurs secondes couches de matériau (20) par-dessus les une ou plusieurs premières couches pour former une pile (22) ; et la fixation des une ou plusieurs secondes couches dans la pile aux une ou plusieurs premières couches dans la pile au moyen des un ou plusieurs éléments de fixation (24) avant l'agencement de la pile dans le moule.

6. Procédé selon la revendication 5, dans lequel l'étape de fixation des une ou plusieurs secondes couches dans la pile aux une ou plusieurs premières couches dans la pile au moyen des un ou plusieurs éléments de fixation forme un kit (60).

7. Procédé selon la revendication 5 ou la revendication 6, comprenant en outre la fourniture d'une couche de support (64) sous les une ou plusieurs premières couches afin de fixer les une ou plusieurs secondes couches aux une ou plusieurs premières couches.

8. Procédé selon la revendication 7, dans lequel la couche de support (64) comprend un matériau conformable.

9. Procédé selon la revendication 7 ou la revendication 8, dans lequel la couche de support (64) est constituée de mousse ou comprend des poils.

10. Procédé selon la revendication 7, dans lequel la couche de support (64) comprend une entretoise qui supporte les une ou plusieurs premières couches de telle sorte qu'un espace est formé sous les une ou plusieurs premières couches.

11. Procédé selon l'une quelconque des revendications 6 à 10, dans lequel le ou chaque élément de fixation (24) a une longueur qui est supérieure à l'épaisseur du kit (60).

12. Procédé selon l'une quelconque des revendications précédentes, dans lequel le procédé comprend :
l'agencement d'une pluralité de premières couches dans une première pile et la fixation desdites premières couches les unes aux autres ;
l'agencement d'une pluralité de secondes couches dans une seconde pile et la fixation desdites secondes couches les unes aux autres ; et
la fixation des première et seconde piles l'une à l'autre au moyen d'éléments de fixation selon la revendication 1 pour former une pile combinée.

13. Procédé selon la revendication 12, dans lequel le procédé comprend en outre l'assemblage de la pile combinée à l'extérieur du moule et le transfert de la pile combinée dans le moule en une seule opération de levage.

14. Procédé selon l'une quelconque des revendications précédentes, dans lequel les une ou plusieurs premières couches et/ou les une ou plusieurs secondes couches comprend un matériau de renfort fibreux, et/ou des matériaux consommables à utiliser dans un procédé de moulage assisté sous vide pour former le composant composite.

15. Utilisation d'un pistolet textile pour administrer des éléments de fixation en plastique pour fixer une pluralité de couches (20) les unes aux autres pendant la fabrication d'une pale d'éolienne, le pistolet textile comprenant une aiguille creuse à travers laquelle les éléments de fixation en plastique (24) sont délivrés.
